# EUROPEAN PATENT APPLICATION

(11) **EP 4 137 763 A1**
(43) Date of publication of application: **22.02.2023**
(21) Application number: 22185660.2
(22) Date of filing: 19.07.2022
(51) Int. Cl.: F25D 11/02, F25D 17/06

(54) **REFRIGERATOR AND METHOD THEREFOR**

(30) Priority: 19.08.2021 CN 202110957841
(71) Applicant: BSH Hausgeräte GmbH, 81739 München (DE)
(72) Inventor: Liu, Xiangyu, Nanjing, 210000 (CN); Wang, Baoyang, Nanjing, 210046 (CN); Zhang, Jiangwen, Chuzhou, 239000 (CN); Zhu, Qiwu, Chuzhou City, 239000 (CN); Zhu, Weizhong, Chuzhou City, Anhui Province, 239000 (CN)

(57) **Abstract**

Embodiments of the present invention provide a refrigerator (10) and a method (50) therefor. The refrigerator (10) includes a first compartment (12), a second compartment (14), and a compressor (16), where temperature adjustable zones of the first compartment (12) and the second compartment (14) both include a freezing temperature zone. The method (50) includes the following steps: (52) obtaining a larger value between a first compressor rotation speed calculated based on a temperature of the first compartment (12) and a second compressor rotation speed calculated based on a temperature of the second compartment (14), as an operation speed of the compressor (16); and (54) operating the compressor (16) at the operation speed to cool the first compartment (12) and the second compartment (14).

## Description

### TECHNICAL FIELD

The present invention relates to electrical equipment, and in particular, to a refrigerator and a method therefor.

### BACKGROUND

CN112484367A discloses a method for a refrigerator, including adjusting a speed of a compressor according to a temperature of a freezing compartment to make the temperature of the freezing compartment tend to be higher than a target stop temperature of the freezing compartment. Therefore, the temperature control of the freezing compartment is more accurate, and the on and off frequency of the compressor can be reduced, which is beneficial to reduce noise and improve energy efficiency.

### SUMMARY

An objective of the present invention is to provide an improved refrigerator and a method therefor.

For the above objective, one aspect of embodiments of the present invention provides a method for a refrigerator. The refrigerator includes a first compartment, a second compartment, and a compressor, where temperature adjustable zones of the first compartment and the second compartment both include a freezing temperature zone. The method includes the following steps: obtaining a larger value of a first compressor rotation speed calculated based on a temperature of the first compartment and a second compressor rotation speed calculated based on a temperature of the second compartment, as an operation speed of the compressor; and operating the compressor at the operation speed to cool the first compartment and the second compartment.

In some embodiments, when a set temperature of the second compartment is lower than a set value, the step of obtaining a larger value of a first compressor rotation speed calculated based on a temperature of the first compartment and a second compressor rotation speed calculated based on a temperature of the second compartment, as an operation speed of the compressor, is performed.

In some embodiments, the second compressor rotation speed is calculated based on a temperature difference between the temperature of the second compartment and a target temperature of the second compartment, and the target temperature of the second compartment is determined according to a user set temperature of the second compartment.

In some embodiments, the first compressor rotation speed is calculated based on a temperature difference between the temperature of the first compartment and a target temperature of the first compartment, and the target temperature of the first compartment is determined according to a user set temperature of the first compartment.

In some embodiments, if a set temperature of the second compartment is higher than a set value, and/or the second compartment has no refrigeration demand, the compressor is operated at the first compressor rotation speed calculated based on the temperature of the first compartment, so that the temperature of the first compartment is between a start temperature and a stop temperature of the first compartment.

In some embodiments, the step of operating the compressor at the operation speed to cool the first compartment and the second compartment includes: stopping the step of obtaining a larger value of a first compressor rotation speed calculated based on a temperature of the first compartment and a second compressor rotation speed calculated based on a temperature of the second compartment, as an operation speed of the compressor, when the temperature of the second compartment reaches a stop temperature of the second compartment.

In some embodiments, the step of operating the compressor at the operation speed to cool the first compartment and the second compartment includes: cooling the first compartment and the second compartment alternately or simultaneously.

Another aspect of the embodiments of the present invention provides a refrigerator, including: a first compartment; a second compartment; a compressor; and a control element configured to cause the refrigerator to perform the steps in the above method.

In some embodiments, the first compartment includes a freezing compartment, and the second compartment includes a variable-temperature compartment.

In some embodiments, the freezing compartment is located below the variable-temperature compartment, and a temperature adjustable zone of the variable-temperature compartment partially overlaps the freezing compartment.

In some embodiments, the refrigerator includes an evaporator compartment including an evaporator, a first compartment air duct configured to deliver cold air from the evaporator compartment to the first compartment, a second compartment air duct configured to deliver cold air from the evaporator compartment to the second compartment, and a damper disposed in the second compartment air duct, where the first compartment air duct is normally open.

If technical conditions permit, the subject matter claimed by any independent claim in the present invention can be combined with a single subject matter or a combination of a plurality of subject matters claimed by any dependent claims to form a novel subject matter.

The present invention will be further described below with reference to the accompanying drawings. Same or similar signs are used in the figures to denote same or similar elements, shapes, and structures in different embodiments, and descriptions of the same or similar elements, shapes, and structures in different embodiments, as well as descriptions of elements, shapes, structures, features, and effects in the prior art may alternatively be omitted.

### BRIEF DESCRIPTION OF THE DRAWINGS

FIG. 1 is a schematic cross-sectional view of a refrigerator according to one aspect of embodiments of the present invention;
FIG. 2 is a partial enlarged schematic cross-sectional view of the refrigerator in FIG. 1;
FIG. 3 is a schematic flowchart of a method for the refrigerator in FIG. 1 according to another aspect of the embodiments of the present invention;
FIG. 4 is a schematic diagram of data of three compressor speeds: a first compressor rotation speed, a second compressor rotation speed, and an operation speed corresponding to different set temperatures of a first compartment and a second compartment of the refrigerator in some embodiments; and
FIG. 5 is a schematic flowchart of a method for a refrigerator in some embodiments.

### DETAILED DESCRIPTION

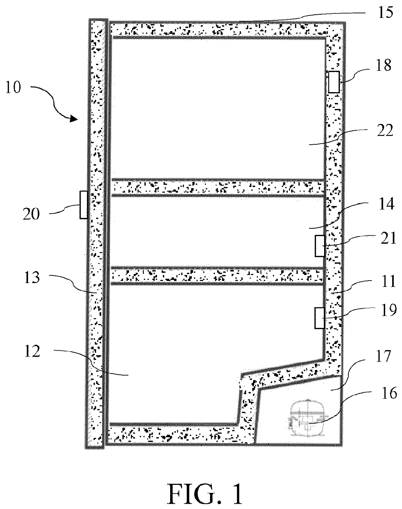

FIG. 1 is a schematic cross-sectional view of a refrigerator according to one aspect of embodiments of the present invention. Referring to FIG. 1, in some embodiments, a refrigerator 10 includes a first compartment 12. A temperature adjustable zone of the first compartment 12 may include a freezing temperature zone. Objects (not shown in drawing) in the first compartment 12 may be frozen in the freezing temperature zone.

The first compartment 12 may be a three-star freezing compartment.

The "first", "second", and similar terms in this application are used to only distinguish with each other, and are not used to indicate any importance, order, or priority.

The "compartment" and similar terms in this application may be components of a storage compartment which is configured inside a box 11 of the refrigerator 10, may be opened and closed by a door body 13, and is for storing objects (not shown in drawing).

The refrigerator 10 includes a second compartment 14. A temperature adjustable zone of the second compartment 14 may include a freezing temperature zone.

Objects (not shown in drawing) in the second compartment 14 may be frozen in the freezing temperature zone.

In some embodiments, the second compartment 14 is a variable-temperature compartment, and the temperature adjustable zone of the second compartment 14 may include a refrigeration temperature zone and a freezing temperature zone.

The second compartment 14 may be adjusted to be lower than -16°C. For example, the second compartment 14 may be adjusted to a temperature between -18°C and -26°C.

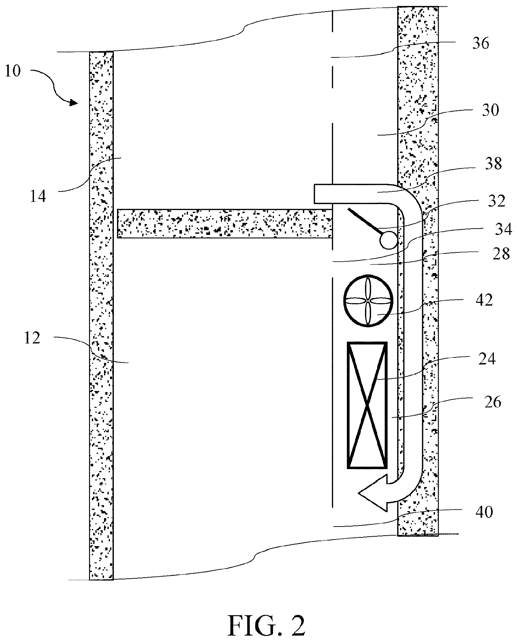

FIG. 2 is a partial enlarged schematic cross-sectional view of the refrigerator in FIG. 1. With reference to FIG. 2, the refrigerator 10 includes a compression refrigeration system configured to cool the first compartment 12 and the second compartment 14. The compression refrigeration system may include a compressor 16, a condenser (not shown in drawing), and at least one evaporator 24. The first compartment 12 and the second compartment 14 are cooled through circulation and phase change of a refrigerant between the compressor 16, the condenser, and the evaporator 24. The compressor 16 may be located on a machine compartment 17 outside the first compartment 12 and the second compartment 14.

In some embodiments, the refrigerator 10 includes an evaporator compartment 26 including the evaporator 24 Driven by an evaporator fan 42, cold air cooled by the evaporator 24 may be delivered to the first compartment 12 and/or the second compartment 14.

The refrigerator 10 includes a control element 18, configured to cause the refrigerator 10 to perform steps in a method 50.

The control element 18 may be a part or all of a control system of the refrigerator 10. The control element 18 may communicate with a user through a user interface (not numbered) and receive a user instruction such as a user set temperature. The control element 18 may communicate with the first compartment 12 and the second compartment 14 to control temperatures of the first compartment 12 and the second compartment 14. The control element 18 may communicate with the compressor 16 to control an operation speed of the compressor 16.

In some embodiments, the first compartment 12 includes a freezing compartment, and the second compartment 14 includes a variable-temperature compartment. In this way, it is beneficial to operate the compressor 16 at a second compressor rotation speed calculated based on a temperature of the variable-temperature compartment when a set temperature of the variable-temperature compartment is low and when the second compressor rotation speed is higher than a first compressor rotation speed calculated based on a temperature of the freezing compartment, so as to ensure that the input of refrigeration capacity always matches the need of heat load of the whole refrigerator 10.

A set temperature range of the freezing compartment may be from -24°C to -16°C. The freezing compartment may be mainly used to store meat food.

A set temperature range of the variable-temperature compartment is more flexible, for example, may be from -3°C to 3°C, or may be from -20°C to +12°C. The user may adjust the temperature of the variable-temperature compartment freely based on foods that need to be stored. For example, wine and tropical fruit may be stored at +12°C, a preferable storage temperature for fresh fish is -3°C, and pork, beef, and mutton are suitable for being stored at - 18°C.

There may be no standard special temperature requirement for the variable-temperature compartment, which may switch between two or more compartments, for example, switching between the freezing compartment and a refrigeration compartment.

In some embodiments, the freezing compartment is located below the variable-temperature compartment, and a temperature adjustable zone of the variable-temperature compartment partially overlaps the freezing compartment. For this type of refrigerator, the advantages of the embodiments of the present invention are particularly obvious.

The refrigerator 10 may include a non-freezing compartment 22, and the non-freezing compartment 22 may include a refrigeration compartment, a chill compartment, a cooling compartment and the like following national standards. The non-freezing compartment 22 may be located above the variable-temperature compartment 14. Take the refrigeration compartment as an example, a set temperature of the non-freezing compartment 22 may be 2°C to 8°C. The user may adjust the set temperature of the non-freezing compartment 22 according to the types of the stored foods. For example, a suitable storage temperature for rhizomes and leafy vegetables is 2°C; a suitable storage temperature for fruits like apples and pears is 4°C; and a suitable storage temperature for white melons, papayas, and lemons is 8°C.

In some embodiments, the refrigerator 10 includes an evaporator compartment 26 including the evaporator 24, a first compartment air duct 28 configured to deliver cold air from the evaporator compartment 26 to the first compartment 12, a second compartment air duct 30 configured to deliver cold air from the evaporator compartment 26 to the second compartment 14, and a damper 32 disposed in the second compartment air duct 30, where the first compartment air duct 28 is normally open. In this way, it is beneficial to cool the first compartment 12 and the second compartment 14 at the same time when the damper 32 is opened, or cool the first compartment 12 separately when the damper 32 is closed.

The cold air may respectively enter the first compartment 12 and the second compartment 14 through a first air outlet 34 and a second air outlet 36 from the first compartment air duct 28 and the second compartment air duct 30.

Through a second compartment return air duct 38, the air (return air) of the second compartment 14 can converge with the air (return air) of the first compartment 12 from a first compartment return air port 40.

The refrigerator 10 may include a first temperature sensor 19 configured to detect the temperature of the first compartment 12, and a second temperature sensor 21 configured to detect the temperature of the second compartment 14. The refrigerator 10 may further include a third temperature sensor 20 configured to detect an ambient temperature outside the refrigerator 10. The first temperature sensor 19 may be located in the first compartment 12. The second temperature sensor 21 may be located in the second compartment 14. The third temperature sensor 20 may be located on an outer surface of the door body 13 of the refrigerator 10 shown in FIG. 1, or may be located on an outer surface or a top 15 of the box 11 in embodiments that are not shown in the drawings. The first temperature 19, the second temperature 21, and the third temperature 20 may detect the temperatures in real time and communicate with the control element 18 in real time, so that the control element 18 can control the compressor 16 in real time with reference to the detected temperatures.

When the first temperature sensor 19 detects that the temperature of the first compartment 12 rises to a start temperature of the first compartment 12, the control element 18 determines that the first compartment 12 has a refrigeration demand. Similarly, when the second temperature sensor 21 detects that the temperature of the second compartment 14 rises to a start temperature of the second compartment 14, the control element 18 determines that the second compartment 12 has a refrigeration demand.

The start temperature and a stop temperature of the first compartment 12 are usually determined by a temperature of the first compartment 12 set by the user. Correspondingly, the start temperature and a stop temperature of the second compartment 14 are usually determined by a temperature of the second compartment 14 set by the user.

When the temperature of the first compartment 12 reaches the stop temperature of the first compartment 12, the control element 18 determines that the refrigeration demand of the first compartment 12 is satisfied. When the temperature of the second compartment 14 reaches the stop temperature of the second compartment 14, the control element 18 determines that the refrigeration demand of the second compartment 14 is satisfied.

When any compartment of the refrigerator 10 has a refrigeration demand or the refrigeration demand is not satisfied, the compressor 16 may be operated to cool the corresponding compartment.

The compressor 16 is an inverter compressor, and therefore the speed of the compressor 16 may be adjusted according to heat load of the refrigerator 10.

In an embodiment, the speed of the compressor 16 is adjusted according to the temperature of the first compartment 12 detected by the first temperature sensor 19 to make the temperature of the first compartment 12 slightly fluctuate around a target temperature between the start temperature and the stop temperature of the first compartment 12. The target temperature of the first compartment 12 may be determined based on the set temperature of the first compartment 12. Through adjusting the speed of the compressor 16 to make the temperature in the first compartment 12 tend to be the target temperature of the first compartment 12, the first compartment may beat a temperature higher than the stop temperature of the first compartment 12, and the refrigeration system may provide a refrigeration capacity that matches the need of the first compartment 12 to the refrigerator 10.

In an embodiment, the speed of the compressor 16 is adjusted according to a temperature difference between the temperature of the first compartment 12 and the target temperature of the first compartment 12, so as to make the refrigeration capacity provided to the first compartment 12 match the need of the first compartment 12.

The rotation speed of the compressor 16 may be determined by a basic speed determined according to the set temperature of the first compartment 12 and the ambient temperature, and an adjustment temperature determined according to the temperature difference between the temperature of the first compartment 12 and the target temperature of the first compartment 12.

When the second compartment 14 has a refrigeration demand, the refrigerator 10 provides a refrigeration capacity to the second compartment 14 to cool the second compartment until the temperature of the second compartment 14 reaches the stop temperature.

If the set temperature of the second compartment 14 is low and the second compartment needs refrigeration, the heat load of the refrigerator 10 increases significantly and the speed of the compressor calculated according to the temperature of the first compartment may not satisfy the heat load of the refrigerator 10.

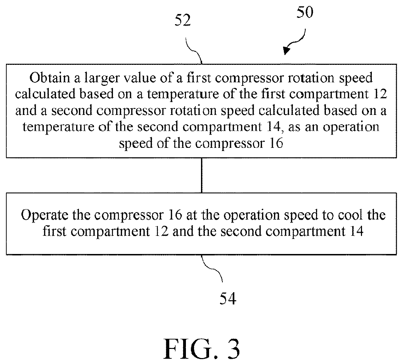

FIG. 3 is a schematic flowchart of a method for the refrigerator in FIG. 1 according to another aspect of the embodiments of the present invention. As shown in FIG. 3, a method 50 for the refrigerator includes the following steps:
52: Obtain a larger value of a first compressor rotation speed calculated based on a temperature of the first compartment 12 and a second compressor rotation speed calculated based on a temperature of the second compartment 14, as an operation speed of the compressor 16.
54: Operate the compressor 16 at the operation speed to cool the first compartment 12 and the second compartment 14.

The embodiments of the present invention may be beneficial to make the input of refrigeration capacity always match the need of the heat load of the whole refrigerator. Specifically, operating the compressor 16 at the operation speed which is the larger value between the first compressor rotation speed calculated based on the temperature of the first compartment 12 and the second compressor rotation speed calculated based on the temperature of the second compartment 14, to cool the first compartment 12 and the second compartment 14 may be beneficial to adjust the operation speed of the compressor 16 in real time as needed when the temperatures of the first compartment 12 and the second compartment 14 change, so as to ensure that the input of the refrigeration capacity always matches the need of the heat load of the whole refrigerator 10.

In some embodiments, when the set temperature of the second compartment 14 is lower than a set value, step 52 of obtaining a larger value of a first compressor rotation speed calculated based on a temperature of the first compartment 12 and a second compressor rotation speed calculated based on a temperature of the second compartment 14, as an operation speed of the compressor 16 is performed. In this way, it is beneficial to operate the compressor 16 at the second compressor rotation speed when the second compressor rotation speed calculated based on the temperature of the second compartment 14 is larger than the first compressor rotation speed calculated based on the temperature of the first compartment 12, so as to make the input of refrigeration capacity match the need of heat load of the whole refrigerator 10, and avoid the situations such as long refrigeration time, unsatisfactory refrigeration effect, and even spoilage in the refrigerator 10 caused by the insufficient input of refrigeration capacity.

The set value may be a fixed value. The set value may be determined according to the set temperature range of the second compartment 14, and the heat load of the first compartment 12 and the second compartment 14 under different conditions. In an embodiment, when the set temperature of the second compartment 14 is larger than the set value, the compressor 16 is operated at the first compressor rotation speed calculated according to the temperature of the first compartment 12.

In some embodiments, the second compressor rotation speed is calculated based on the temperature difference between the temperature of the second compartment 14 and the target temperature of the second compartment 14, and the target temperature of the second compartment 14 is determined according to a user set temperature of the second compartment 14. In this way, it is beneficial to operate the compressor 16 at the second compressor rotation speed when the user set temperature of the second compartment 14 changes to be lower than the set value and when the second compressor rotation speed calculated based on the temperature of the second compartment 14 is larger than the first compressor rotation speed calculated based on the temperature of the first compartment 12, so as to make the input of refrigeration capacity match the need of heat load of the whole refrigerator 10, and avoid the situations such as long refrigeration time, unsatisfactory refrigeration effect, and even spoilage in the refrigerator 10 caused by insufficient input of refrigeration capacity. The target temperature of the second compartment 14 is related to the set temperature of the second compartment 14, and therefore the second compressor rotation speed is related to the set temperature of the second compartment 14.

In some embodiments, the first compressor rotation speed is calculated based on the temperature difference between the temperature of the first compartment 12 and the target temperature of the first compartment 12, and the target temperature of the first compartment 12 is determined according to a user set temperature of the first compartment 12. In this way, it is beneficial to operate the compressor 16 at the first compressor rotation speed when the user set temperature of the second compartment 14 changes to be lower than the set value and when the second compressor rotation speed calculated based on the temperature of the second compartment 14 is lower than the first compressor rotation speed calculated based on the temperature of the first compartment 12, so as to make the input of refrigeration capacity match the need of heat load of the whole refrigerator 10, and avoid the situations such as long refrigeration time, unsatisfactory refrigeration effect, and even spoilage in the refrigerator 10 caused by insufficient input of refrigeration capacity. The target temperature of the first compartment 12 is related to the set temperature of the first compartment 12, and therefore the first compressor rotation speed is related to the set temperature of the first compartment 12.

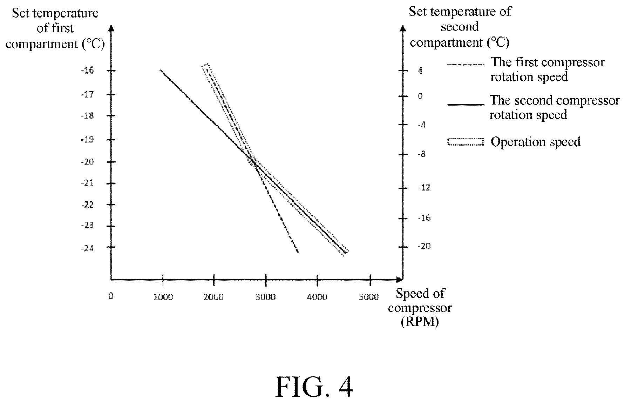

FIG. 4 is a schematic diagram of data of three compressor speeds: a first compressor rotation speed, a second compressor rotation speed, and a rotation speed corresponding to different set temperatures of a first compartment and a second compartment of the refrigerator in some embodiments. As shown in FIG. 4, when the operation speed is a larger value between the first compressor rotation speed and the second compressor rotation speed, it is more beneficial to ensure that the input of refrigeration capacity always matches the need of the heat load of the whole refrigerator.

In some embodiments, if the set temperature of the second compartment 14 is higher than the set value, and/or the second compartment 14 has no refrigeration demand, the compressor 16 is operated at the first compressor rotation speed calculated based on the temperature of the first compartment 12, so as to make the temperature of the first compartment 12 between the start temperature and the stop temperature of the first compartment 12. In this way, it is beneficial to maintain the continuous operation of the compressor 16, avoid the unexpected shutdown of the compressor 16, and reduce the on and off frequency of the compressor 16, so as to reduce noise, improve energy efficiency, and reduce and eliminate the energy loss of the compressor 16 during startup after shutdown, and the temperature control of the first compartment 12 may be more accurate.

In some embodiments, step 54 of operating the compressor 16 at the operation speed to cool the first compartment 12 and the second compartment 14 includes: stopping step 52 of obtaining a larger value of a first compressor rotation speed calculated based on a temperature of the first compartment 12 and a second compressor rotation speed calculated based on a temperature of the second compartment 14, as an operation speed of the compressor 16, when the temperature of the second compartment 14 reaches a stop temperature of the second compartment 14. In this way, when the second compartment 14 has no refrigeration demand, the compressor 16 is operated at the first compressor rotation speed calculated based on the temperature of the first compartment 12, so as to make the temperature of the first compartment 12 between the start temperature and the stop temperature of the first compartment 12, maintain the continuous operation of the compressor 16, avoid the unexpected shutdown of the compressor 16, and reduce and eliminate the energy loss of the compressor 16 during startup after shutdown.

In some embodiments, step 54 of operating the compressor 16 at the operation speed to cool the first compartment 12 and the second compartment 14 includes: cooling the first compartment 12 and the second compartment 14 alternately or simultaneously. In this way, it is beneficial to adjust the efficiency of cooling the first compartment 12 and the second compartment 14 as needed.

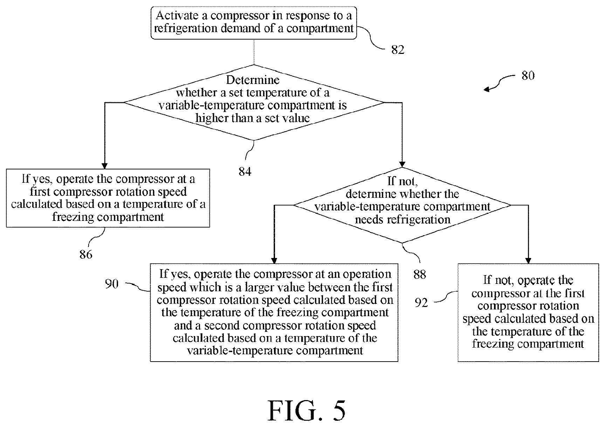

FIG. 5 is a schematic flowchart of a method for a refrigerator in some embodiments. Referring to FIG. 5, in some embodiments, a method 80 for a refrigerator includes the following steps:
82: Activate a compressor in response to a refrigeration demand of a compartment;
84: Determine whether a set temperature of a variable-temperature compartment is higher than a set value.
86: If yes, operate the compressor at a first compressor rotation speed calculated based on a temperature of a freezing compartment.
88: If not, determine whether the variable-temperature compartment needs refrigeration.
90: If yes, operate the compressor at an operation speed which is a larger value between the first compressor rotation speed calculated based on the temperature of the freezing compartment and a second compressor rotation speed calculated based on a temperature of the variable-temperature compartment.
92: If not, operate the compressor at the first compressor rotation speed calculated based on the temperature of the freezing compartment.

In this way, the freezing compartment can be in continuous refrigeration, and the variable-temperature compartment is in intermittent refrigeration controlled on or off. In addition, only when the set temperature of the variable-temperature compartment is lower than the set value and the variable-temperature compartment needs refrigeration, the compressor is operated at the operation speed which is the larger value of the first compressor rotation speed calculated based on the temperature of the freezing compartment and the second compressor rotation speed calculated based on the temperature of the variable-temperature compartment. Otherwise, the compressor is operated at the first compressor rotation speed calculated based on the temperature of the freezing compartment.

The various specific implementations described above and shown in the accompanying drawings are only used to illustrate the present invention, but are not all of the present invention. Any variation made by a person of ordinary skill in the art to the present invention within the scope of the basic technical concept of the present invention shall fall within the protection scope of the present invention.

## Claims

1. A method (50) for a refrigerator (10), **characterized in that**, the refrigerator (10) comprises a first compartment (12), a second compartment (14), and a compressor (16), wherein temperature adjustable zones of the first compartment (12) and the second compartment (14) both comprise a freezing temperature zone, and the method (50) comprises the following steps:
(52) obtaining a larger value of a first compressor rotation speed calculated based on a temperature of the first compartment (12) and a second compressor rotation speed calculated based on a temperature of the second compartment (14), as an operation speed of the compressor (16); and
(54) operating the compressor (16) at the operation speed to cool the first compartment (12) and the second compartment (14).

2. The method (50) according to claim 1, **characterized in that**, the step (52) obtaining a larger value is performed when a set temperature of the second compartment (14) is lower than a set value.

3. The method (50) according to claim 1, **characterized in that**, the second compressor rotation speed is calculated based on a temperature difference between the temperature of the second compartment (14) and a target temperature of the second compartment (14), and the target temperature of the second compartment (14) is determined according to a user set temperature of the second compartment (14).

4. The method (50) according to claim 1, **characterized in that**, the first compressor rotation speed is calculated based on a temperature difference between the temperature of the first compartment (12) and a target temperature of the first compartment (12), and the target temperature of the first compartment (12) is determined according to a user set temperature of the first compartment (12).

5. The method (50) according to claim 1, **characterized in that**, if a set temperature of the second compartment (14) is higher than a set value, and/or the second compartment (14) has no refrigeration demand, the compressor (16) is operated at the first compressor rotation speed calculated based on the temperature of the first compartment (12), so that the temperature of the first compartment (12) is between a start temperature and a stop temperature of the first compartment (12).

6. The method (50) according to claim 1, **characterized in that**, the step (54) operating the compressor comprises: stopping the step (52) obtaining a larger value when the temperature of the second compartment (14) reaches a stop temperature of the second compartment (14).

7. The method (50) according to claim 1, **characterized in that**, the step (54) operating the compressor comprises: cooling the first compartment (12) and the second compartment (14) alternately or simultaneously.

8. A refrigerator (10), **characterized by** comprising:
a first compartment (12);
a second compartment (14);
a compressor (16); and
a control element (18), configured to cause the refrigerator (10) to perform the steps in the method (50) according to any one of claims 1 to 7.

9. The refrigerator (10) according to claim 8, **characterized in that**, the first compartment (12) comprises a freezing compartment, and the second compartment (14) comprises a variable-temperature compartment.

10. The refrigerator (10) according to claim 9, **characterized in that**, the freezing compartment is located below the variable-temperature compartment, and a temperature adjustable zone of the variable-temperature compartment partially overlaps the freezing compartment.

11. The refrigerator (10) according to claim 8, **characterized by** comprising an evaporator compartment (26) comprising an evaporator (24), a first compartment air duct (28) configured to deliver cold air from the evaporator compartment (26) to the first compartment (12), a second compartment air duct (30) configured to deliver cold air from the evaporator compartment (26) to the second compartment (14), and a damper (32) disposed in the second compartment air duct (30), wherein the first compartment air duct (28) is normally open.
